(19) Europäisches Patentamt
European Patent Office
Office européen des brevets

(11) **EP 2 207 039 A2**

(12) **EUROPEAN PATENT APPLICATION**

(43) Date of publication:
**14.07.2010 Bulletin 2010/28**

(51) Int Cl.:
**G01N 35/10** (2006.01)   **G01F 22/00** (2006.01)
**G01F 23/26** (2006.01)   **G01F 23/28** (2006.01)
**G01N 35/00** (2006.01)

(21) Application number: **09172653.9**

(22) Date of filing: **09.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.10.2008 EP 08105599**

(71) Applicants:
• **Roche Diagnostics GmbH**
**68305 Mannheim (DE)**

• **F.HOFFMANN-LA ROCHE AG**
**4070 Basel (CH)**

(72) Inventor: **Elsenhans, Olivier**
**CH-5643 Sins (CH)**

(74) Representative: **Poredda, Andreas**
**Roche Diagnostics AG**
**Forrenstrasse**
**6343 Rotkreuz (CH)**

(54) **Process and system for measuring liquid volumes and for controlling pipetting processes**

(57) Process for monitoring a program controlled pipetting process comprising the steps of

■ Selecting a program for treating a fluid, said program identifying at least a first volume of the fluid

■ Providing an instrument for automated pipetting of fluid, said instrument comprising a pipettor and a susceptibility measurement unit as well as a controller for controlling operation of the pipettor and the same or another controller for controlling the susceptibility measurement unit, said controller operating according to the selected program

■ pipetting with said pipettor under control of the controller the first volume of fluid into a container,

■ conducting a non-contact capacitive or inductive susceptibility measurement of the container and fluid therein,

■ calculating a volume of said fluid in the container from the susceptibility measurement,

■ comparing the calculated volume with the first volume,

■ releasing a volume discrepancy indication if said calculated volume deviates from the identified first volume more than a threshold volume.

The system further concerns a system for program controlled pipetting with monitoring of the pipetting.

Fig. 8

EP 2 207 039 A2

## Description

Field of the invention

The present invention refers to a process and system for measuring liquid volumes by capacitive or inductive measurement. The invention further concerns a system for measuring the volume of a liquid as well as a process and arrangement for controlling a pipetting process.

Background of the invention

For chemical analyses, particularly clinic chemical analyses, medical analyses, analyses in biochemistry, etc. it is important that required liquids, e.g. reagents, like substances and preparations as well as the sample needed for the analysis are added to a container in an intended amount so that a meaningful and reliable result of the analysis will be achieved.

Due to the small amounts used for such kind of analyses the measurement of the amount of liquid is difficult. It is known to measure volume changes for instance by measuring weight. However, scales for such relatively small forces are very sensitive to environmental disturbances such as airstreams, changes in temperature, vibrations, etc. By means of weight measurements it is difficult to register the volume of a droplet, in particular, if for the preparation of the samples the individual components are added into a container in rapid succession.

In US 4,051,431 a device for the measurement of flow rates of urine is described. Herein, an electric condenser is proposed, the capacity of which is influenced by the time dependent degree of filling a special vessel with the urine. The described arrangement, however, requires a direct contact of the vessel walls with the urine. This arrangement is therefore not suited for analytical purposes due to the inherent carryover problems.

In EP-B-1 335 765 it is proposed to detect liquid drops within a drop counter by means of capacity changes within a capacitive cell, formed by two plates.

In US 5,582,798 it is proposed to determine the liquid amount contained within a pipetting device. The volume sensing device employs a capacitive measurement in combination with a trigger to determine the liquid-air boundary in the pipette tip. For this purpose the pipette tip is vertically moved relative to the capacitive measurement unit. Due to the known geometry of the pipette tip the volume can be calculated based on the determined filling level.

The volume measurements of the prior art, however, have their own difficulties and limitations. Such volume measurements are normally less accurate than regular pipetting processes based on syringe pumps, microgearwheel pumps, membrane pumps and the like.

The present invention proposes to employ the established pipetting processes as currently used in the analytical field but to further employ susceptibility measurements for controlling such pipetting processes. Errors of pipetting systems can so be detected by deviations of measured volumes from intended volumes.

It is further an aim of the present invention to provide a volume measurement or volume control process which can be integrated into an analytical or pre-analytical process, which means that it is adapted to reliably measure small volumes in the microliter range and that it avoids contaminations.

In particular for blood tests, where many blood samples have to be prepared in a very short time in a reliable manner a fast monitoring of liquid volumes for the preparation of the samples is extremely important. In certain aspects the process is a PCR-process to be subsequently executed for determining the presence of an analyte (e.g., viral RNA or DNA). For diagnostic analysis it is essential that all components needed (sample, reagents, controls,...) are added in an intended amount as otherwise the result of the analysis is not reliable or can even be wrong.

Brief description of the drawings

The invention is described by way of examples and with reference to the attached figures, tables and diagrams in more detail, in which:

Figures 1A-1C schematically show a measurement arrangement for the measurement of the volume of a liquid.

Figures 2A and 2B show in perspective and in cross sectional view a measurement arrangement for liquid volume in a sample container.

Figure 3 schematically shows in perspective view a further design of a measurement arrangement.

Figures 4A and 4B show in perspective view and in view seen from the bottom a capacitive measuring station.

Figures 5A and 5B show in perspective view and in view seen from the bottom an inductive measuring station.

Figures 6A and 6B show in form of a diagram the results of the measurements performed using a cylindric condenser as shown in figures 4A and 4B.

Figures 7A and 7B show the results of the measurement executed using an inductive system according to figures 5A and 5B.

Figure 8 shows a system for mixing sample fluids with adjuvant fluids.

Summary of the invention

A first subject of the invention is a process for monitoring a program controlled pipetting process comprising the steps of

■ Selecting a program for treating a fluid, said program identifying at least a first volume of the fluid

■ Providing an instrument for automated pipetting of fluid, said instrument comprising a pipettor and a susceptibility measurement unit as well as a controller for controlling operation of the pipettor and the same or a further controller for controlling the susceptibility measurement unit, said controller operating according to the selected program

■ pipetting with said pipettor under control of the controller the first volume of fluid into a container,

■ conducting a non-contact capacitive or inductive susceptibility measurement of the container and fluid therein,

■ calculating a volume of said fluid in the container from the susceptibility measurement,

■ comparing the calculated volume with the first volume.
releasing a volume discrepancy indication if said calculated volume deviates from the identified first volume more than a threshold volume.

A second subject of the invention is a System for program controlled pipetting with monitoring of the pipetting comprising

■ an Input/Output-Unit for selecting a program for treating a fluid, said program identifying at least a first volume of a fluid

■ an pipetting instrument comprising a pipettor, a non-contact capacitive or inductive susceptibility measuring unit and a controller for controlling the operation of the pipettor and the same or a further controller for controlling the sucsceptibility measuring unit according to the selected program,

■ the controller controlling the pipettor to pipet the first volume of fluid into a container,

■ the controller controlling the susceptibility measurement unit to conduct a susceptibility measurement of the container and fluid therein,

■ a computing unit calculating a volume of fluid in the container from the susceptibility measurement,

■ said computing unit comparing the calculated volume with the identified first volume,

■ said computing releasing a volume discrepancy indication if said calculated volume deviates from the first volume more than a threshold volume.

Detailed description of the invention

The present invention is directed to processes and systems for monitoring a program controlled pipetting process. Pipetting processes are widely known in the field of analysis. A number of pipetting principles are known which provide the necessary accuracy. Often syringe type pipettors are employed or precise flow through pumps as gearwheel pumps or membrane pumps. While such pumps are very reliable in principle, they may fail from time to time for a number of reasons, e.g. air bubbles in the system, program errors, electrical failures and so on.

The present invention concerns the monitoring of such pipetting processes, which means that it is monitored if the pipetting processes have occurred as intended. For the monitoring susceptibility measurements are employed.

Program controlled pipetting means that the pipetting is not carried out by hand but that it occurs in an automated manner by an apparatus which is controlled by a program. The apparatus for pipetting is controlled by a controller which is able to control operation of the pump of the pipettor pump fluid and is able to control mechanical actions of the pipettor, primarily lateral and vertical movement of the pipettor needle.

The controller is controlled by a computing unit which runs a program for pipetting. A program according to the present invention comprises in addition to the known pipetting process, process steps for monitoring the pipetting process. The pipetting process intends the pipetting of a particular volume of fluid. The monitoring process checks if the intended volume has been pipetted.

The monitoring comprises the steps of conducting a non-contact capacitive or inductive susceptibility measurement of a container which contains pipetted liquid. From the susceptibility measurement a volume of liquid in the container is calculated as described herein later. The monitoring further involves the comparison of the calculated volume with the intended volume of liquid. The program further releases a volume discrepancy indication if the calculated volume and the intended volume differ more than a threshold. Such threshold needs to take into account the limited accuracy of susceptibility measurements compared to the often more accurate pipetting processes to avoid erroneous error messages. On the other hand the susceptibility measurements are important to detect if something with the pipetting process went wrong. Typical pipetting processes deposit volumes in the microliter to milliliter range into containers while the susceptibility measurements are able to detect volume deviations one order below reliably. Typically the thresholds are therefore in the range of 0.01 to 1 microliter.

According to the present invention it is proposed that for the measurement of a liquid volume in a container susceptibility measurement is employed. Susceptibility measurements measure the susceptibility properties of a medium as a function of frequency of an electric or magnetic field. This is based on the interaction of an external field with the electric or magnetic dipole moment of the sample and the measured effect is called electric or magnetic susceptibility. The term susceptibility measurement as used herein includes electric as well as magnetic susceptibility and therefore the present invention can be carried out by using capacitive as well as inductive measurements. The present invention can be conducted by susceptibility measurements at a specific frequency or by recording at a number of frequencies (i.e. spectroscopy).

Measurement of pipetted volumes for controlling the pipetting process is done by means of susceptibility measurement directly in the area of the sample container. The measurement can be done either in a capacitive way, for instance by using a cylinder-like, a plate like or half shell like measuring arrangement or in an inductive way, for instance by using at least one coil.

Volume measurement based on susceptibility measurement is a goal difficult to achieve as the measurable effects are relatively small. The present invention, however, proposes an integrated process and system where certain parameter can be controlled or are known, so that volume measurement becomes feasible.

According to the present invention certain boundary conditions are set or determined beforehand:

First requirement: "known container susceptibility".

For performing susceptibility spectroscopy on liquid volumes according to the present invention containers of known susceptibility are employed. This can be achieved in the following ways:

    a) containers of very low susceptibility are employed so that for determination of liquid volumes the susceptibility contribution of the containers can be neglected.
    b) The susceptibility of the container is known and the known value is taken into account when calculating the liquid volume. The system can be set up, for example, to employ only one or a finite number of different container types for which susceptibility is known. In case of only one container type the system/process just takes into account the susceptibility of this container type or in case of multiple container types determines/knows the type of container and takes into account the susceptibility of the actual container type. The container type can be determined by the system e.g. based on the container geometry (e.g. diameter, height) or by a marking on the container (e.g. barcode, RFID-Chip). Most advantageously the system, however, "knows" the container because it is taken from a stock or area of known containers.
    c) The susceptibility of the container is determined in advance of volume measurement. This can be done just in the same measuring cell as for liquid volume measurement or in a separate measuring cell.

Second requirement "constant measurement cell":

Susceptibility measurement is a process which is prone to disturbances and "absolute" measurements are hard to achieve.

According to the present invention successive measurements are performed in a measurement cell of unchanged geometry. This means the measurement cell is not changed from one to the next measurement in the same system but that the containers are placed into a constant measuring cell.

Third requirement "known susceptibility of the liquid to be measured":

In particular from this requirement it can be seen that the prior art leads into a completely different direction than the present invention:

US 5,582,798 determines a liquid-air boundary and therefore just relies on the fact that susceptibility of air and liquid are very different.

EP 1335765 restricts measurement to a falling drop which approximately has the shape of a sphere and further relies on the assumption that the dielectric constant is that of water.

US 4,051,431 only describes a flow measurement and therefore relies on changes of susceptibility.

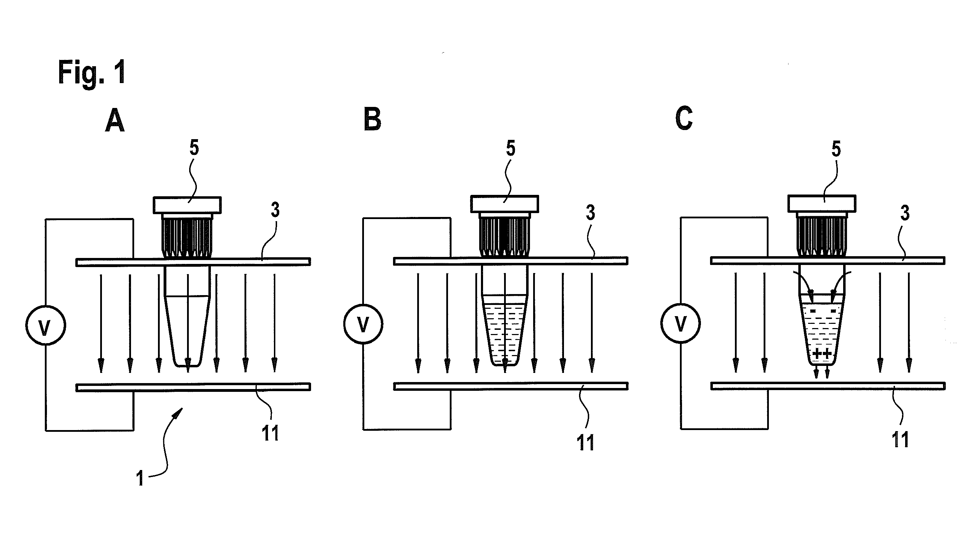

The present invention, however, provides a method and system which enables volume measurement in a container. An important aspect is that the susceptibility of liquid to be measured is known. This "knowledge" is available because of working in a system environment. This means liquids which are employed - except an analytical sample - have known properties. When for example a reagent is used, the type of reagent is known to the analytical system and has known susceptibility properties. The system may have a lookup-table for susceptibility parameters of certain reagents/ liquids or susceptibility parameters may be read in, e.g. by reading a barcode or RFID-chip on the reagent container.
The term "susceptibility parameter" is not restricted to a susceptibility constant itself but may be a parameter relating to the susceptibility constant of the fluid. This means it is sufficient that the susceptibility parameter allows volume determination in the susceptibility measurement cell of the system. The susceptibility parameter may be a calibration factor related to the susceptibility property of the liquid which enables volume calculation. The system/process according to the present invention, however, is not only able to measure the volume of well known liquids as reagents, buffers, elution liquids, washing fluids, system fluid etc. (such fluids which are not sample fluid are called adjuvant fluids herein). In most analytical processes the amount of sample fluid is only a minute amount of the fluid which has to be measured. Often sample fluid is mixed with reagents or the like in a ratio that the sample fluid makes up only 1 to 5 percent of the mixture. The susceptibility properties of the mixture are therefore mostly determined by fluids of known susceptibility properties which are added to the sample. Volume measurement therefore can be done assuming that the susceptibility properties of the mixture are the same as for the known fluids. Further the type of sample (blood, serum, urine... ) is also known and its susceptibility properties can be guessed. Based on the low percentage of sample in the overall mixture the susceptibility properties can be calculated and the volume determination can be made with only few percent deviation. This in particular is sufficient if the susceptibility measurement is employed to verify an intended volume in a container as e.g. for controlling a pipetting process. For detecting if an intended release of fluid into a container has happened the volume determination by susceptibility measurement does not need to be too exact.
The process according the present invention as well as the arrangement are particularly useful for the volume measurement of a liquid sample or sample components for the preparation of samples or / and for performing analytical reactions, e.g. chemical analyses, preferably clinic chemical analyses. In particular the inventive process as well as the arrangement is suitable for monitoring pipetting steps in analytical processes in the medical field, at which a plurality of samples are analyzed using reagents and further components, for instance for the recognition of infectious or genetic diseases and for the detection of viruses. More generally, the present invention is suitable for any kind of process control or plausibility check in processes, in which a small amount of liquid is added into a container, wherein it is important to recognize that a proper amount of liquid has been added.
Within figures 1A-1C the principle of measurement is shown schematically. The principle is based on the fact, that the capacity of a capacitor is dependent on the dielectric properties of the medium arranged within the capacitor.
If the medium contained in a container located within the capacitor is changed, for instance by pipetting a liquid into the container, the consequence is that the capacity will change. For instance, figure 1A shows a system prior to the execution of a pipetting process having a capacity C. For that reason, a liquid container such as an analysis container, reaction container or sample container 5 is arranged such that its content is arranged between electrodes 3 and 11 and the capacity between the two electrodes is measured. By pipetting a liquid into the sample container 5, as shown schematically in figure 1B and designated with the reference no 2, a change in capacity in the amount of $\Delta C_1$ occurs. According the electric flux lines shown in figure 1B the added liquid is a non-conductive liquid.

In fig. 1C the sample container is shown schematically after the pipetting of a liquid. In this case, a capacity change of $\Delta C_2$ occurs as a result of the pipetting.

Due to the measured capacity changes it can be recognized, whether a planned pipetting process has been executed or not and a liquid volume can be - at least approximately - determined.

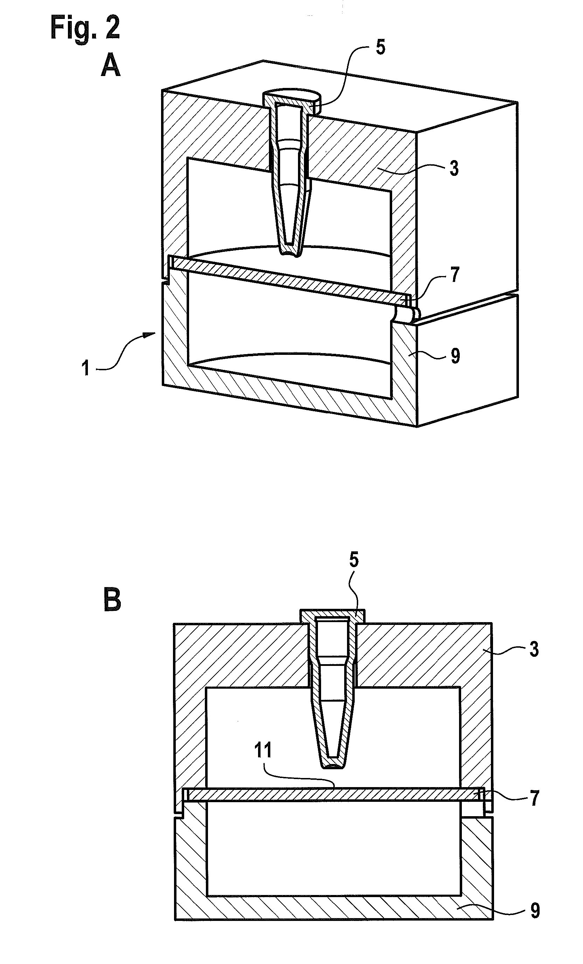

By the below exemplified arrangements the invention shall be described in more detail. In figures 2A and 2B a possible embodiment of a measuring arrangement is shown. Fig. 2A shows a perspective view of the measurement arrangement and fig. 2B a sectional view. A liquid container 5 is arranged within a recess in a cover, which cover 3 at the same time acts as a plate electrode. Within the measurement arrangement 2a socket print-holder 9 is employed for holding a printed plate 7 with an integrated circuit in which beneath the sample container 5 the measuring electrode 11 is arranged. For the measurements the print-holder as well as the cover are firmly arranged,for instance screwed, so that the internal space is isolated against electromagnetic fields from the environment.

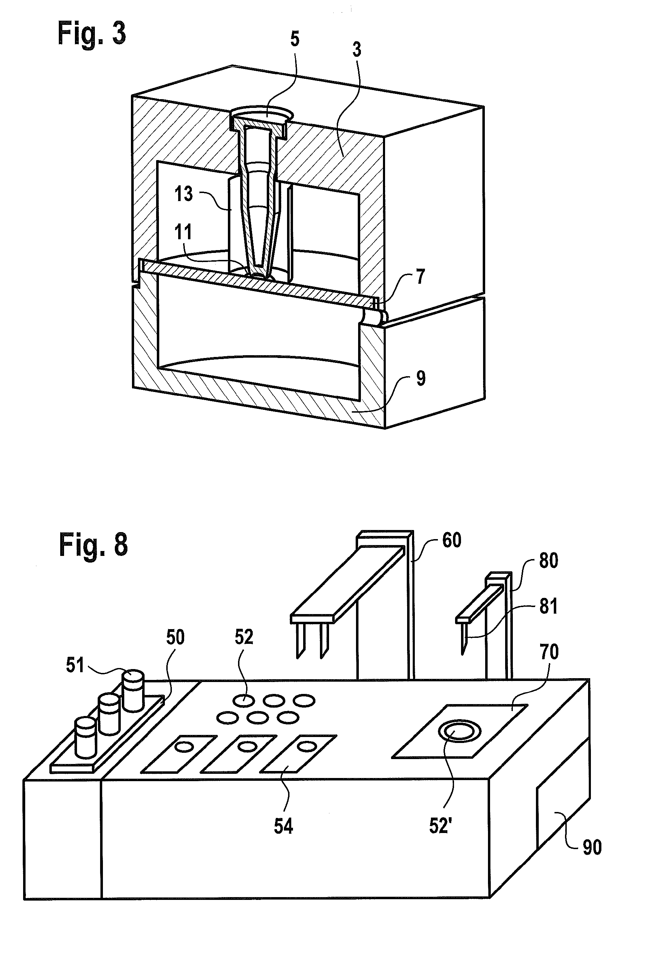

Instead of the electrodes provided and shown in figures 2A and 2B it is also possible to arrange a cylindric electrode as shown in fig. 3. The liquid container 5 is arranged within a cover 3 of the measurement cell. In contrast to the arrangement shown in figures 2A and 2B a cylinder like electrode 13 is provided. The measuring electrode 11 again is arranged on a printed plate 7 beneath the sample contained in analysis container 5. The measuring arrangement as shown in fig. 3 comprises a cover 3, made of a material conducting electric current, for instance of a cupric material, and on the bottom side the measuring volume faces a print plate 7, for instance a cupric print plate. Arranged on this print plate in the centre beneath the liquid container 5 a measuring electrode is arranged. The measuring station is dimensioned such that the container inserted into the measuring station slightly abuts to the measuring electrode. In addition, on the print plate a hollow cylinder 13 is arranged. This hollow cylinder 13 is grounded within the casing. For the measurement the print-holder and the cover are firmly connected, for instance screwed, so that the interior of the casing is isolated against the environment.

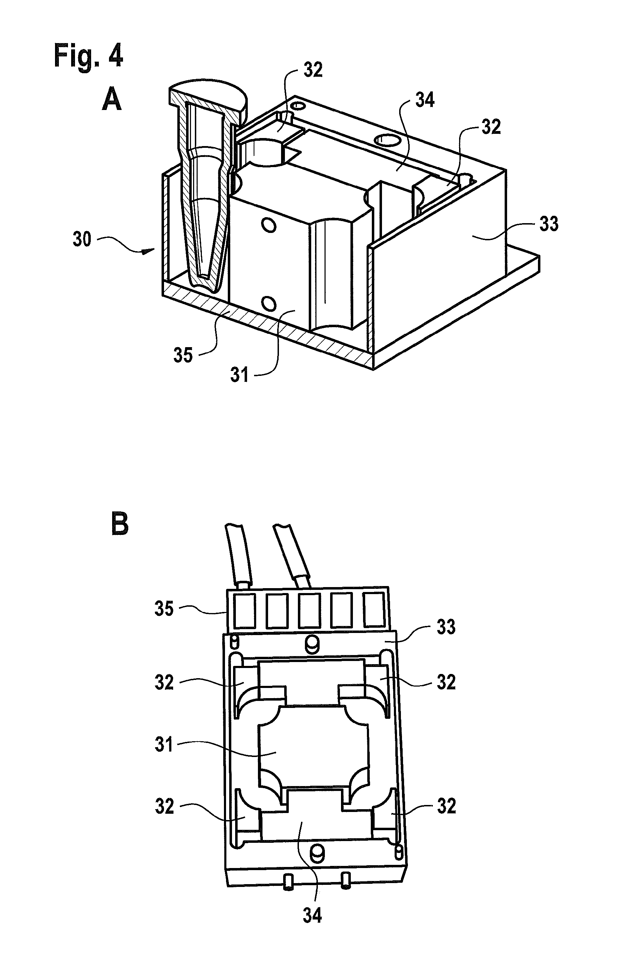

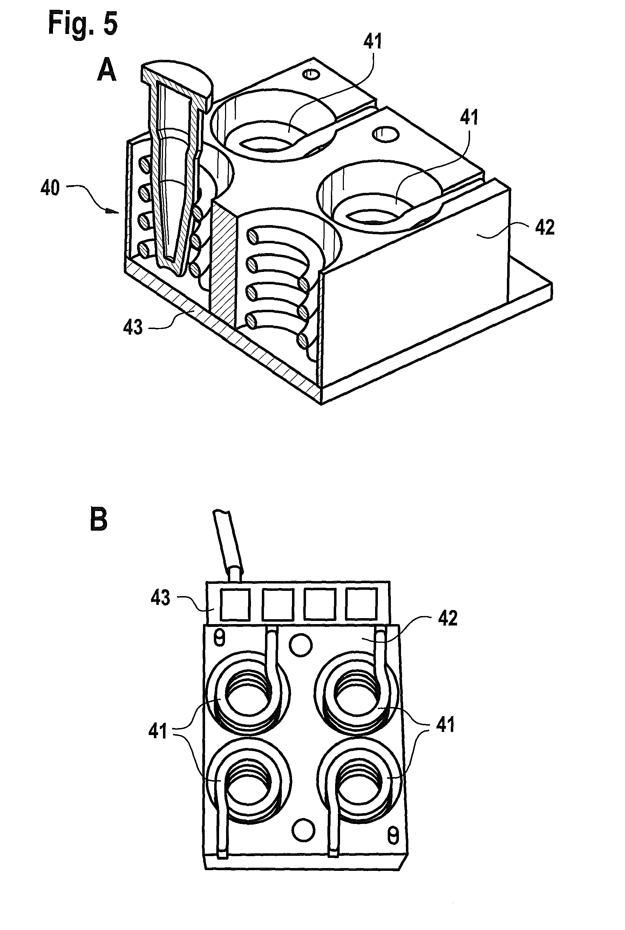

In figures 4A and 4B a capacitive measuring arrangement is shown in detail. In the middle a centric stimulating electrode 31 is arranged, for instance consisting of brass, with a surface, for instance being silver plated. The measuring electrodes 32 each are arranged in the corners of the casing 33 diametrically in relation to the axes of the liquid container 5, without being electrically connected to the casing. The casing 33 can be made for instance from brass and the surfaces can be for instance silver plated. The measuring electrodes 32 are held in position by an isolation 34. From the bottom side, as shown in fig. 5B, the casing is closed by means of a printed circuit board 35. The various electrodes of the measuring cell are contacted by means of electrodes on the printed circuit board and the contacts are led to high frequency measuring wires for measuring purposes. The stimulation of the system by high frequency signals is know to the artisan and e.g. described in US 4,051,431.

The measuring station as shown in figures 4A and 4B is suitable for the arrangement of four liquid containers at the same time or in sequence. It is possible to independently measure the capacity changes for each liquid container at the addition of a liquid or at the pipetting process at the same time.

In figures 5A and 5B an inductive measuring arrangement is shown. This measuring arrangement 40 contains four coils 41, each having e.g. four windings. A coil can for instance be made of a silver plated cupreous wire. These coils are connected on one side to the casing 42 and on the other side to a wire connection arranged on the printed circuit board 43.

Susceptibility Measurements:

Measurements were executed with the measuring arrangements as shown in figure 4. First an empty liquid tube or container is inserted into the measuring arrangement and the capacity and/or inductivity changes influenced by the insertion are measured. For measuring the capacity changes afterwards in steps the sample liquid was added in aliquots of $5\mu l$ until a total volume of $30\mu l$ was reached. After each addition or each pipetting process the capacity change for the system was determined and recorded in a diagram. The process was executed with the same sample solution for each of the two measuring arrangement ten times in total.

The measurements for a system, as shown in fig. 4 was made using an oscilloscope and a waveform generator. A sinusoid stimulating signal (10 V peak to peak) was applied to the stimulating electrode. The transmitting signal was picked up from the measuring electrode with the oscilloscope and the average value was determined. From the averaged signal the peak to peak voltage was determined.

Within the following table 1 the measured average values are indicated in relation to the added liquid volumes - $5\mu l$ step by step. Also mentioned are the standard deviations of the values.

**Table I**

| Volume ($\mu$l) | Average Value (fF) | Standard deviation (in percentage compared to the average value) |
|---|---|---|
| 0 | 4.9 | 20% |
| 5 | 31.2 | 6% |
| 10 | 51.1 | 2% |
| 15 | 65.9 | 2% |
| 20 | 78.5 | 3% |
| 25 | 90.1 | 4% |
| 30 | 98.8 | 4% |

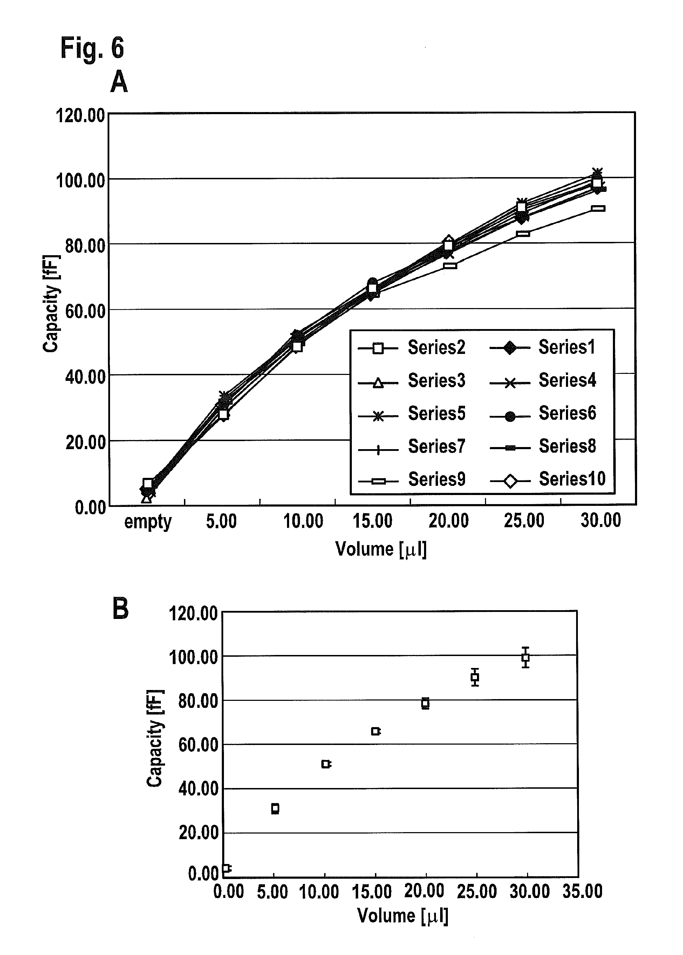

In fig. 6A ten series of measurements of step by step additions of 5$\mu$l at each step until a total volume of 30$\mu$l was reached are indicated.

Fig. 6B shows the average peak to peak voltage of the signals due to pipetting of the liquid amounts, again 5$\mu$l for each step, and the deviation range.

Fig. 6A as well as fig. 6B show, that the recognition of adding an amount of liquid is significant and reliable. With a standard deviation of less than 10% it can be determined in a reliable manner which amount of liquid has been added into the container.

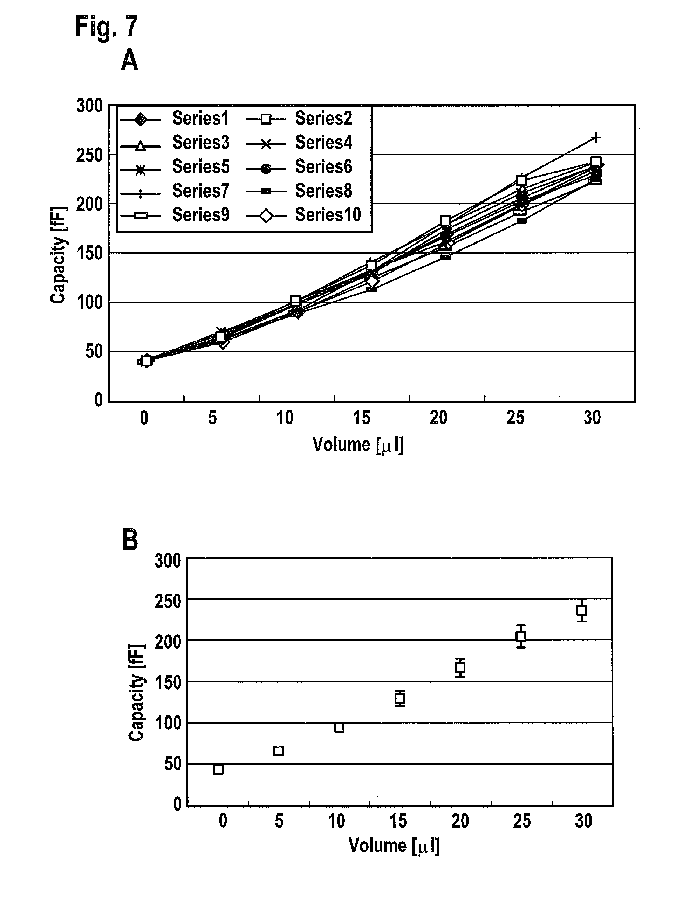

In a similar way in figures 7A and 7B the recognition of adding a liquid amount into a liquid container by using inductive measurement arrangement according to fig. 5A and B is shown. The measurement for the inductive system was done using a network analyzer.

The reflected signal at a frequency of 2,4 GHz was measured and analyzed by the measurement arrangement. Again ten series were measured each by adding 5$\mu$l of liquid in steps until a total volume of 30$\mu$l was reached. In table II the averaged values measured are listed together with the standard deviations. Compared with the capacitive measurements the standard deviations are slightly higher but are in general still less than 10%.

**Table II**

| Volume ($\mu$l) | Average Value (fH) | Standard deviation (in percentage compared to the average value) |
|---|---|---|
| 0 | 42.5 | 1.5% |
| 5 | 65.2 | 4.3% |
| 10 | 95.6 | 5.1% |
| 15 | 130.1 | 6.3% |
| 20 | 167.6 | 6.5% |
| 25 | 205.6 | 6.4% |
| 30 | 236.0 | 5.4% |

In fig. 7A the results for the ten series are shown in diagram form, while in fig. 7B the average values of the ten measurements are shown.

Even if the standard deviation is higher compared to the capacitive measurement again the results are quite reliable and therefore even by using an inductive measuring arrangement it is possible in a reliable manner to determine the liquid amount which has been pipetted into the container. This allows to control if a pipetting process has occurred in the intended manner.

The various measurement arrangements as shown in figures 1-5 as well as the described examples as shown in diagram form in figures 6 and 7 are only representing examples being suitable to describe the general understanding of the present invention. Of course it is possible in any manner to change or to modify the described measuring arrangements as well as it is possible to arrange the analyses or sample containers in any manner in relation to the measuring arrangements. This means the adding of a liquid amount into a liquid container can be recognized in a capacitive manner or in an inductive manner by using at least two electrodes or at least one coil. Whether the used electrodes are plate like, cylinder like, shell like, coil like or are designed in a different manner is not basically relevant for the present invention.

Figure 8 shows a system according to the present invention for mixing sample fluids with adjuvant fluids in a predetermined volumetric ratio. The system has a sample reception portion with a receptacle for holding a sample rack (50). The sample rack holds several sample tubes (51) with sample fluid.

The system further has a stock of containers (52) with a predetermined susceptibility parameter $\chi_c$. A gripper (60) is provided to transfer containers from the stock of containers into the susceptibility measurement unit (70).

The system further comprises a pipetting unit (80). The pipetting needle (81) of the pipetting unit aspirates an amount of sample fluid from a sample container and dispenses the sample fluid into a container 52' located in the susceptibility measurement unit. The susceptibility measurement unit can sense the change of permittivity due to the added sample fluid. The pipettor further aspirates an adjuvant fluid (e.g. a reagent) from a bottle (54) and dispenses it into the container 52'.

The system further has a computation unit (90) which is coupled to a memory. The memory has stored susceptibility parameters of the container ($\chi_c$) as well as of the adjuvant fluids. The memory further has stored one or more susceptibility parameter characteristic for certain sample fluids, as blood, serum, urine etc. The susceptibility parameters of unit volumes of adjuvant fluid and sample fluid are $\chi_\alpha$ and $\chi_s$.

The overall susceptibility parameter therefore is

$$X \quad = \quad \chi_c \quad + \quad \upsilon_\alpha \quad \cdot \quad \chi_\alpha \quad + \quad \upsilon_s \quad \cdot \quad \chi_s \qquad (1)$$

with $\upsilon_\alpha$ and $\upsilon_s$ being the volumes of adjuvant fluid and sample fluid.

After the first pipetting step of a volume $\upsilon_s$ the expected susceptibility effect is:

$$\chi_{1st} \quad = \quad \chi_c \quad + \quad \upsilon_s \quad \cdot \quad \chi_s \qquad (2)$$

The measured susceptibility effect can be compared with the calculated susceptibility effect $\chi_{1st}$ based on the volume $u_s$ which was intended to be pipetted into the container. Based on this comparison it can be determined if the pipetting step has taken place as intended. This can be done by comparing the calculated with the measured susceptibility parameter of the calculated volume with the intended volume. Air bubbles in the pipetting needle or malfunction of the pipetting device can be detected accordingly and an error signal can be activated or corrective measures can be initiated.

A similar control can be conducted after the second pipetting step of adjuvant fluid. The expected susceptibility parameter can be calculated according to formula (1) and can be compared with the measured value. Error signals or corrective measures can be initiated as described above if a threshold is passed. The susceptibility measurement therefore allows a control of the pipetting process. According to this it is advantageous if the system has a control unit which controls pipetting and a program comprising pipetting operations and intended volumes of liquid to be pipetted are stored therein. The actual processes and volumes can be monitored by susceptibility measurement and can be compared with intended process steps and volumes according to the program stored in a memory.

Thresholds can be set for deviations in susceptibility or volume. This can be an absolute threshold (e.g. 0.01 ml) or a relative threshold ($T_R$) with $T_R = A_V/V$ with $A_V$ as deviation between calculated and intended volume and V as the intended volume. A typical relative threshold is 20%.

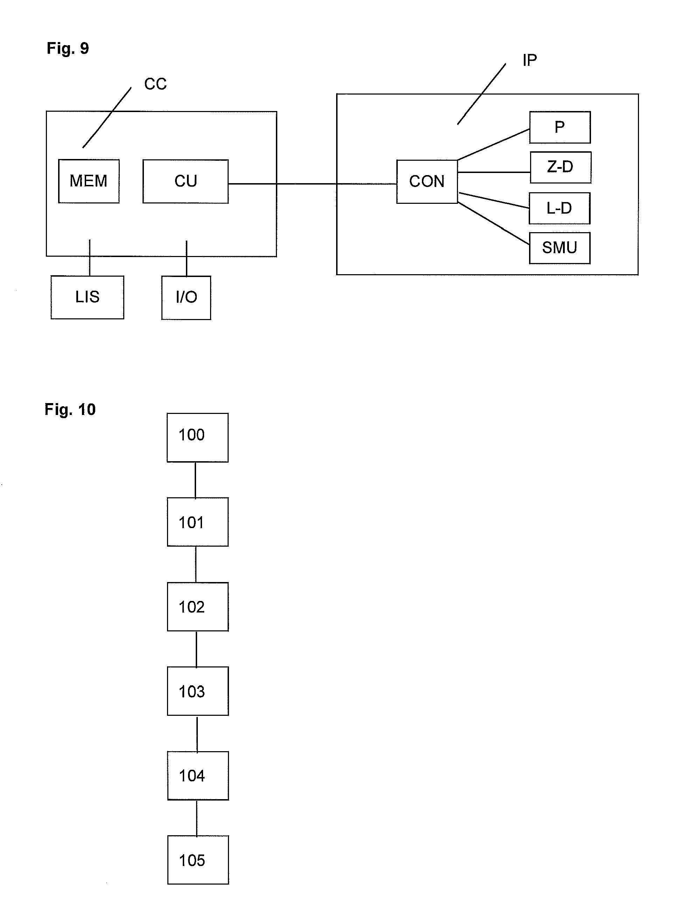

Figure 9 shows the schematic setup of a system according to the present invention as depicted in figure 8 with the distinction that in figure 9 the instrument portion (IP) for pipetting and susceptibility measurements is physically separated from a control computer (CC). IP and CC are typically side by side and connected by a LAN or other data connection. The control computer comprises a computing unit (CU) and a memory (MEM) for storing program instructions. The CC instructs the controller (CON) according to such program instructions. The controller then controls the vertical drive (Z-D) and a lateral drive (L-D) of a pipettor as well as a pump (P) of the pipettor. For pipetting processes the pipettor is moved with a pipetting needle into a liquid and the pump is actuated to aspirate the liquid. The pipetting needle is then moved into a container and the pump is actuated to release an intended liquid volume as specified in the program instructions into the container.

The program typically comprises multiple steps for e.g. an analytical process in which the pipetting process is only a minor portion. Such a program may be selected by an operator at an input/output unit (I/O) of the control computer. Often the user, however, only orders a certain analysis to be performed at a ceratin sample and based on this the control computer selects a program for doing the analysis as earlier specified by the provider of the analytical assay. Such an analysis typically involves one or more pipetting processes which may be monitored according to the present invention by susceptibility measurements.

According to the present invention the control computer further monitors with the susceptibility measuring unit (SMU) if an intended pipetting process has been performed as desired, i.e. if a desired volume of liquid has been released into a container. Such monitoring may be conducted via the depicted controller (CON) but typically an analytical instrument comprises multiple controllers, often one for each operative entity as a motor, pump or an inductive or capacitive measuring unit. As further shown in figure 9, the control computer may be connected to a laboratory information system (LIS) for receiving and relaying various data as e.g. patient data and analysis parameters or results.

Figure 10 schematically depicts the process of monitoring a pipetting process.

In step 100 a program is selected for treating a sample fluid which program involves at least one pipetting step of fluid.

In step 101 the pipetting is performed. According to figure 9 this involves the control of a pipettor to dispense the desired volume of fluid. For monitoring if the pipetting has been conducted as desired a susceptibility measurement is preformed in step 102. This can be done under the control of the control computer (CC) by instructing a controller (CON) which operates the susceptibility measuring unit (SMU). The measurement result from the SMU is sent to the control computer where it can be converted by the CU into a volume (step 103). This can be compared with an intended volume according to the program (step 104). If the calculated volume deviates from the intended volume more than a threshold as specified in the program, then a discrepancy indication is released (step 105). This discrepancy indication can be a warning shown on the I/O-unit or can be e.g. an information stored together with the analytical result or a protocol of the pipetting process.

The arrangements as described within the present invention and as shown by way of examples in figures 1-10 as well as the described inventive process are in particular suitable for clinic chemical analyses as for instance medical analyses, where a plurality of samples have to be provided with respective solutions, liquid additives, reaction solutions, etc. for the execution of analyses or analyses reactions as for instance chemical analyses as in particular clinic chemical analyses, medical analyses, analyses in biochemistry, agrochemistry etc. for the detection for instance of diseases, pathogen organisms, viruses, infectious organisms, bacteria, etc. and can be the basis for diagnosis. Especially for the various actual diseases such as for instance aids, avian influenza, severe acute respiratory syndrome (SARS), hepatitis, etc. it is very important, that analyses procedure in particular of blood samples can be executed in large quantities and very reliable which means, that especially the preparation of the samples or the analyses must be quick and reliable which is possible by using the process and arrangement as defined within the present invention. Besides the mentioned blood tests it is of course also possible to use the present invention for food analyses, analyses of human or animal fabrics for instance in immunological tests, clinic chemical tests, for analyses in biochemistry, in agroculture chemistry, in veterinary medicine, in general for analyses in life science, etc.

## Claims

1. Process for monitoring a program controlled pipetting process comprising the steps of

   ■ Selecting a program for treating a fluid, said program identifying at least a first volume of the fluid
   ■ Providing an instrument for automated pipetting of fluid, said instrument comprising a pipettor and a susceptibility measurement unit as well as a controller for controlling operation of the pipettor and the same or another controller for controlling the susceptibility measurement unit, said controller operating according to the selected program
   ■ pipetting with said pipettor under control of the controller the first volume of fluid into a container,
   ■ conducting a non-contact capacitive or inductive susceptibility measurement of the container and fluid therein,
   ■ calculating a volume of said fluid in the container from the susceptibility measurement,
   ■ comparing the calculated volume with the first volume,
   ■ releasing a volume discrepancy indication if said calculated volume deviates from the identified first volume more than a threshold volume.

2. Process according to claim 1, wherein said program further identifies a second volume of an adjuvant fluid, comprising the step of pipetting said second volume of adjuvant fluid into said container and comparing the volume calculated from susceptibility measurement with the sum of the first and second volume.

3. Process according to claim 1, wherein the volume discrepancy indication is an alarm or a message.

4. Process according to claim 1, wherein the volume discrepancy indication is to create a data set indicating said discrepancy.

5. Process according to claim 1, wherein the susceptibility parameter of the liquid is read from a memory or from a marking on a container containing the liquid.

**6.** System for program controlled pipetting with monitoring of the pipetting comprising

■ an Input/Output-Unit for selecting a program for treating a fluid, said program identifying at least a first volume of a fluid
■ an pipetting instrument comprising a pipettor, a non-contact capacitive or inductive susceptibility measuring unit and a controller for controlling the operation of the pipettor and the same or a further controller for controlling the sucsceptibility measuring unit according to the selected program,
■ the controller controlling the pipettor to pipet the first volume of fluid into a container,
■ the controller controlling the susceptibility measurement unit to conduct a susceptibility measurement of the container and fluid therein,
■ a computing unit calculating a volume of fluid in the container from the susceptibility measurement,
■ said computing unit comparing the calculated volume with the identified first volume,
■ said computing releasing a volume discrepancy indication if said calculated volume deviates from the first volume more than a threshold volume.

**7.** System according to claim 6, said program further identifiying a second volume of an adjuvant fluid and the processing unit controlling the pipettor to pipet said second volume, wherein said computing unit compsosed the computed volume with the sum of the first and second volume.

**8.** System according to claim 6, wherein the system further comprises a memory for storing susceptibility parameters of said fluids.

**9.** System according to claim 6 comprising a reservoir of an adjuvant fluid and a reservoir of a sample fluid.

**10.** System according to claim 6, wherein the susceptibility measuring unit comprises a susceptibility measurement space which is shielded against outside electromagnetic fields.

**11.** The system according to claim 6, being connected to a laboratory information system.

Fig. 1

A          B          C

EP 2 207 039 A2

**Fig. 2**
**A**

**B**

**Fig. 3**

5  3

13

11

7

9

**Fig. 8**

60

80

81

50  52  70

51

54  52'

90

# Fig. 4

## A

## B

# Fig. 5

A

B

## Fig. 6

### A

### B

## Fig. 7

### A

### B

**Fig. 9**

CC

| MEM | CU |

LIS

I/O

IP

CON

P

Z-D

L-D

SMU

**Fig. 10**

100

101

102

103

104

105

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4051431 A
- EP 1335765 B
- US 5582798 A
- EP 1335765 A